# EUROPEAN PATENT SPECIFICATION

(11) **EP 3 356 166 B1**
(45) Date of publication and mention of the grant of the patent: **08.05.2019**
(21) Application number: 16788198.6
(22) Date of filing: 29.09.2016
(51) Int. Cl.: B60H 1/00, B60H 1/02

(54) **VEHICLE-MOUNTED HEAT UTILIZATION DEVICE**
VORRICHTUNG ZUR NUTZUNG EINER FAHRZEUGMONTIERTEN HEIZUNG
DISPOSITIF D'UTILISATION DE CHALEUR MONTÉ SUR UN VÉHICULE

(30) Priority: 02.10.2015 JP 2015197120
(43) Date of publication of application: 08.08.2018
(73) Proprietor: TOYOTA JIDOSHA KABUSHIKI KAISHA, Toyota-shi, Aichi-ken 471-8571 (JP); Denso Corporation, Kariya-city, Aichi-Pref. 448-8661 (JP)
(72) Inventor: ONISHI, Yoichi, Toyota-shi Aichi-ken 471-8571 (JP); SHIMPO, Yoshikazu, Toyota-shi Aichi-ken 471-8571 (JP); MURATA, Toshio, Toyota-shi Aichi-ken 471-8571 (JP); TANIGUCHI, Shinichi, Toyota-shi Aichi-ken 471-8571 (JP); KOMITSU, Hideyuki, Toyota-shi Aichi-ken 471-8571 (JP); OZAWA, Ikuo, Toyota-shi Aichi-ken 471-8571 (JP); ENOMOTO, Norihiko, Kariya-shi Aichi-ken 448-8661 (JP); SAIDA, Kazunori, Kariya-shi Aichi-ken 448-8661 (JP); KAKEHASHI, Nobuharu, Kariya-shi Aichi-ken 448-8661 (JP)
(74) Representative: D Young & Co LLP
(86) International application number: PCT/IB2016/001460
(87) International publication number: WO 2017/055913

(56) References cited:
- JP-A- S54 138 248
- US-A- 4 949 553
- US-A1- 2006 130 469
- US-A1- 2010 281 901

## Description

### BACKGROUND OF THE INVENTION

### 1. Field of the Invention

The present invention relates to a vehicle-mounted heat utilization device.

### 2. Description of Related Art

Japanese Patent Application Publication No. 6-219150 (JP 6-219150 A) proposes an air conditioner that circulates fluid in the refrigerant cycle, in which an evaporator and a condenser are provided, to cause the fluid to receive or absorb the refrigerant heat with the use of a heat exchanger. More specifically, an air conditioner is disclosed that circulates fluid between the evaporator and the air conditioning radiator and between the condenser and the outside radiator in the summer, and between the evaporator and the outside radiator and between the condenser and the air conditioning radiator in the winter.

### SUMMARY OF THE INVENTION

According to the air conditioner disclosed in Japanese Patent Application Publication No. 6-219150 (JP 6-219150 A), the vehicle interior can be heated in the winter using a heat source other than the engine by circulating fluid between the evaporator and the outside radiator and between the condenser and the air conditioning radiator. However, there is a room for improvement to heat the vehicle interior more quickly in the cold season.

In addition, according to the air conditioner disclosed in Japanese Patent Application Publication No. 6-219150 (JP 6-219150 A), because the heat of the coolant, heated by the engine, is used for vehicle interior heating during the warmup operation in the cold season, the warmup operation time is increased and the fuel efficiency is decreased due to a mechanical loss.

Another prior art vehicle-mounted heat utilization device, according to the preamble of claim 1, is known from US 4,949,553 A.

The present invention provides a vehicle-mounted heat utilization device that can heat the vehicle interior more quickly in the cold season without increasing the warmup operation time.

A vehicle-mounted heat utilization device according to a first aspect of the present invention includes: an engine fluid circuit in which fluid circulates to cool an engine; a heater fluid circuit in which the fluid circulates, the heater fluid circuit passing through an exhaust heat recovery apparatus and a vehicle-interior heat exchanger for radiating a heat of the fluid into a vehicle interior, the exhaust heat recovery apparatus being configured to recover a heat of exhaust gas; a cooling-heating fluid circuit in which the fluid circulates, the cooling-heating fluid circuit passing through a radiating heat exchanger, the radiating heat exchanger being included in a refrigeration cycle in which refrigerant is compressed by a compressor and the compressed refrigerant is expanded; a first switching unit provided between the engine fluid circuit and the heater fluid circuit, the first switching unit being configured to selectively switch a state between a connected state of the first switching unit and a disconnected state of the first switching unit, the connected state of the first switching unit being a state in which the engine fluid circuit and the heater fluid circuit are connected, the disconnected state of the first switching unit being a state in which the engine fluid circuit and the heater fluid circuit are disconnected; a second switching unit provided between the heater fluid circuit and the cooling-heating fluid circuit, the second switching unit being configured to selectively switch a state between a connected state of the second switching unit and a disconnected state of the second switching unit, the connected state of the second switching unit being a state in which the heater fluid circuit and the cooling-heating fluid circuit are connected, the disconnected state of the second switching unit being a state in which the heater fluid circuit and the cooling-heating fluid circuit are disconnected; and a circulation unit that circulates the fluid having passed the radiating heat exchanger, in the heater fluid circuit when the heater fluid circuit and the cooling-heating fluid circuit are placed in the connected state by the second switching unit

According to the aspect described above, the engine is cooled by the fluid as the fluid circulates in the engine fluid circuit along a circulation path for cooling the engine.

In the heater fluid circuit, the vehicle interior is heated by the vehicle interior heat exchanger, which is heated by the fluid, as the fluid circulates along the circulation path that passes through the vehicle interior heat exchanger.

In the cooling-heating fluid circuit, the fluid is heated by the radiating heat exchanger as the fluid circulates along the circulation path that passes through the radiating heat exchanger included in the refrigeration cycle.

The first switching unit, provided between the engine fluid circuit and the heater fluid circuit, selectively switches the state between the connected state, in which the engine fluid circuit and the heater fluid circuit are connected, and the disconnected state, in which the engine fluid circuit and the heater fluid circuit are disconnected, thus allowing the engine fluid circuit and the heater fluid circuit to be connected or disconnected.

The second switching unit, provided between the heater fluid circuit and the cooling-heating fluid circuit, selectively switches the state between the connected state, in which the heater fluid circuit and the cooling-heating fluid circuit are connected, and the disconnected state, in which the heater fluid circuit and the cooling-heating fluid circuit are disconnected, thus allowing the heater fluid circuit and the cooling-heating fluid circuit to be connected and disconnected.

By placing the heater fluid circuit and the cooling-heating fluid circuit in the connected state by the second switching unit, the fluid, which has passed the radiating heat exchanger, is circulated in the heater fluid circuit by the circulation unit.

Providing the above configuration can make the engine warmup operation time shorter when the warmup operation is performed in the cold season with the engine fluid circuit and the heater fluid circuit disconnected by the first switching unit than when the warmup operation is performed with the engine fluid circuit and the heater fluid circuit connected. At the same time, by placing the heater fluid circuit and the cooling-heating fluid circuit in the connected state by the second switching unit, the fluid, which has passed the radiating heat exchanger, is circulated in the heater fluid circuit by the circulation unit. Therefore, the fluid in the heater fluid circuit can be heated by two heat sources (the radiating heat exchanger and the exhaust heat recovery apparatus) for heating the vehicle interior. As a result, the vehicle interior can be heated more quickly.

In the vehicle-mounted heat utilization device according to the first aspect the circulation unit may be a pump provided in the cooling-heating fluid circuit.

As a second aspect of the present invention, in the vehicle-mounted heat utilization device according to the first aspect, the cooling-heating fluid circuit may pass through an on-vehicle heat receiving apparatus.

According to the second aspect, the on-vehicle heat receiving apparatus can be heated by the fluid heated by the radiating heat exchanger.

As a third aspect of the present invention, the vehicle-mounted heat utilization device according to the first aspect or the second aspect may include a first heat exchanger that radiates a heat of the fluid of the engine fluid circuit, and a second heat exchanger. The second heat exchanger may be selectively connectable to a cold coolant circuit and a hot coolant circuit. The cold coolant circuit may pass through a heat absorbing heat exchanger included in the refrigeration cycle and the hot coolant circuit may pass through the radiating heat exchanger.

According to the aspect described above, the heat of the fluid can be absorbed and radiated by one second heat exchanger.

The vehicle-mounted heat utilization device according to the third aspect may include a connection unit that selectively connects the second heat exchanger to the cold coolant circuit or to the hot coolant circuit.

This configuration allows the cold coolant circuit or the hot coolant circuit to be selectively connected to the second heat exchanger.

The vehicle-mounted heat utilization device, according to the first aspect to the third aspect, may include a detection unit that detects a temperature of the fluid circulating in the engine fluid circuit, and a control unit. The control unit may be configured to: control the first switching unit, the second switching unit, and the compressor so that the engine fluid circuit and the heater fluid circuit are disconnected, the heater fluid circuit and the cooling-heating fluid circuit are connected, and the compressor is operated when the temperature detected by the detection unit is equal to or lower than a predetermined temperature; and control the first switching unit, the second switching unit, and the compressor so that the engine fluid circuit and the heater fluid circuit are connected, the heater fluid circuit and the cooling-heating fluid circuit are disconnected, and the compressor is stopped when the temperature detected by the detection unit is higher than the predetermined temperature.

That is, the fluid circulation route can be switched by the control unit between the warmup operation time and the warmup operation termination time.

The vehicle-mounted heat utilization device according to the second aspect may include a detection unit that detects a temperature of the fluid circulating in the engine fluid circuit, an outside air temperature sensor that detects an outside air temperature outside a vehicle, and a control unit. The control unit may be configured to: control the first switching unit, the second switching unit, and the compressor so that the engine fluid circuit and the heater fluid circuit are disconnected, the heater fluid circuit and the cooling-heating fluid circuit are connected, and the compressor is operated when the temperature detected by the detection unit is equal to or lower than a predetermined temperature; control the first switching unit, the second switching unit, and the compressor so that the engine fluid circuit and the heater fluid circuit are connected, the heater fluid circuit and the cooling-heating fluid circuit are disconnected, and the compressor is operated when the temperature detected by the detection unit is higher than the predetermined temperature and the outside air temperature detected by the outside air temperature sensor is lower than a second predetermined temperature; and control the first switching unit, the second switching unit, and the compressor so that the engine fluid circuit and the heater fluid circuit are connected, the heater fluid circuit and the cooling-heating fluid circuit are disconnected, and the compressor is stopped when the temperature detected by the detection unit is higher than the predetermined temperature and the outside air temperature detected by the outside air temperature sensor is higher than the second predetermined temperature.

In the third aspect, when the vehicle-mounted heat utilization device includes a connection unit that selectively connects the second heat exchanger to the cold coolant circuit or to the hot coolant circuit, the connection unit may be configured to connect the second heat exchanger and the hot coolant circuit when the vehicle performs vehicle-interior air conditioning and to connect the second heat exchanger and the cold coolant circuit when the vehicle performs vehicle interior heating.

As described above, the present invention achieves the effect of providing a vehicle-mounted heat utilization device that can heat the vehicle interior more quickly in the cold season without increasing the warmup operation time.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a diagram showing a general configuration of a vehicle-mounted heat utilization device in a first embodiment;
FIG. 2 is a block diagram showing a configuration of a control system of the vehicle-mounted heat utilization device in the first embodiment;
FIG 3 is a diagram showing the state when the warmup operation of the vehicle-mounted heat utilization device in the first embodiment is terminated;
FIG 4 is a flowchart showing an example of the flow of the processing performed by a control unit of the vehicle-mounted heat utilization device in the first embodiment;
FIG 5 is a diagram showing a general configuration of a vehicle-mounted heat utilization device in a second embodiment;
FIG. 6 is a block diagram showing a general configuration of a control system of the vehicle-mounted heat utilization device in the second embodiment;
FIG 7 is a diagram showing the state when the warmup operation of the vehicle-mounted heat utilization device in the second embodiment is terminated;
FIG. 8 is a flowchart showing an example of the flow of the processing performed by a control unit of the vehicle-mounted heat utilization device in the second embodiment;
FIG. 9 is a diagram showing a general configuration of a vehicle-mounted heat utilization device in a third embodiment;
FIG. 10 is a block diagram showing a general configuration of a control system of the vehicle-mounted heat utilization device in the third embodiment;
FIG. 11 is a diagram showing the state when the warmup operation of the vehicle-mounted heat utilization device in the third embodiment is terminated; and
FIG. 12 is a flowchart showing an example of the flow of the processing performed by a control unit of the vehicle-mounted heat utilization device in the third embodiment.

### DETAILED DESCRIPTION OF EMBODIMENTS

Examples of embodiments are described in detail below with reference to the drawings. A vehicle-mounted heat utilization device in the embodiments is a device that can heat the vehicle interior using heat generated by the engine and so on mounted on the vehicle. The device may be mounted not only on a car, on which the engine is mounted, but also on a hybrid car on which both the motor and the engine are mounted.

### (First embodiment)

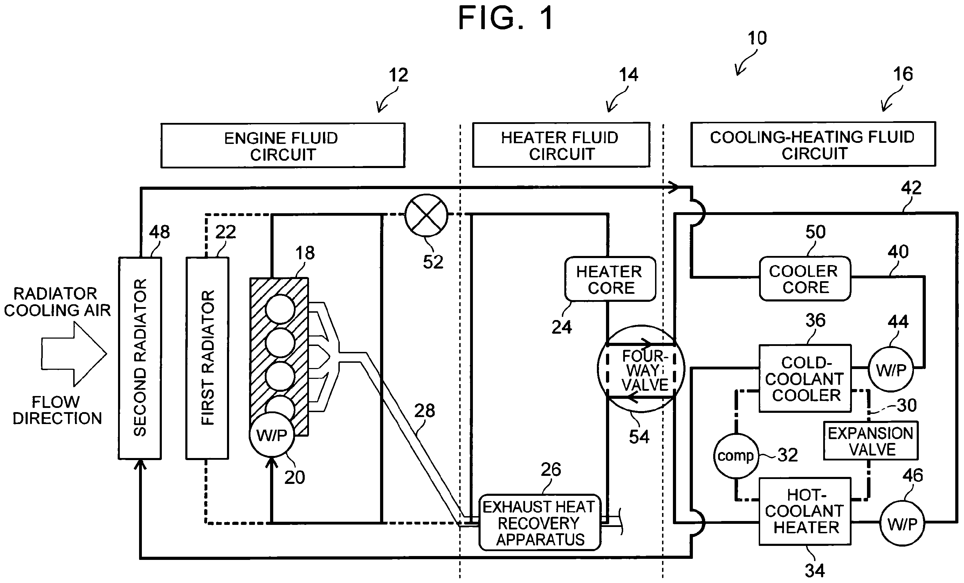

First, a vehicle-mounted heat utilization device in a first embodiment is described below. FIG. 1 is a diagram showing a general configuration of the vehicle-mounted heat utilization device in the first embodiment.

A vehicle-mounted heat utilization device 10 in this embodiment includes an engine fluid circuit 12, a heater fluid circuit 14, and a cooling-heating fluid circuit 16 as shown in FIG. 1. Coolant, one type of fluid, circulates in each of the fluid circuits. Although coolant (such as antifreeze fluid) is used as the fluid in this embodiment, other fluids such as water may also be used.

The engine fluid circuit 12 is a circulation path in which coolant circulates along the circulation path that cools an engine 18. In this circulation path, the coolant is circulated by a water pump (W/P) 20. In the engine fluid circuit 12, a first radiator 22, which works as a first heat exchanger, is connected via a thermostat, not shown, and the coolant circulates in the first radiator 22 according to the on/off state of the thermostat. That is, when the temperature of the coolant is equal to or lower than a predetermined temperature (for example, the warmup operation termination temperature), the thermostat is closed and, in this case, the coolant does not circulate in the first radiator 22. Conversely, when the temperature of the coolant is higher than the predetermined temperature, the thermostat is opened to circulate the coolant to the first radiator 22 to radiate the heat. The capacity of the first radiator 22, the air volume of the electric fan, and the thermostat on/off temperature are set so that the temperature of the coolant circulating in the engine fluid circuit 12 becomes equal to or lower than the predetermined temperature TW1. The water pump 20 of the engine fluid circuit 12 may be a mechanical water pump that operates by the driving of the engine 18 or may be an electric water pump that operates electrically. In the example in this embodiment, a mechanical water pump is used.

The heater fluid circuit 14 is a circulation path of the coolant, provided on the vehicle interior side, for cooling the engine 18. The heater fluid circuit 14 includes a heater core 24, which works as a vehicle-interior heat exchanger, and an exhaust heat recovery apparatus 26.

The heater core 24 is a heat exchanger for heating the vehicle interior. The heat of the coolant is radiated from the heater core 24 for heating the vehicle interior.

The exhaust heat recovery apparatus 26, provided in the path of an exhaust pipe 28 via which the exhaust gas of the engine 18 is exhausted, can heat the coolant using the heat of the exhaust pipe 28. That is, the vehicle-mounted heat utilization device 10 can heat the coolant for heating the vehicle interior, using the heat recovered by the exhaust heat recovery apparatus 26.

The cooling-heating fluid circuit 16 is a circulation path in which the coolant circulates along the circulation path that passes through the heat exchangers included in the refrigeration cycle 30. The cooling-heating fluid circuit 16 can heat or cool the coolant using the heat exchangers included in the refrigeration cycle 30.

More specifically, the refrigeration cycle 30, which includes a compressor 32 that works as a compressing unit, a hot coolant heater 34 that works as a radiating heat exchanger, a cold coolant cooler 36 that works as an endothermic heat exchanger, and an expansion valve 38, functions as a heat pump. That is, by circulating the refrigerant while compressing the refrigerant by the compressor 32 and expanding the refrigerant by the expansion valve 38, the heat of the compressed refrigerant is radiated by the hot coolant heater 34 to heat the coolant and the heat is absorbed into the expanded refrigerant by the cold coolant cooler 36 to cool the coolant.

In more detail, the cooling-heating fluid circuit 16 includes a cold coolant circuit 40 that is a circulation path, in which the coolant is cooled by passing through the cold coolant cooler 36, and a hot coolant circuit 42 that is a circulation path in which the coolant is heated by passing through the hot coolant heater 34. The cold coolant circuit 40 includes a cold coolant water pump 44, a second radiator 48, and a cooler core 50. In this circuit, the cold coolant water pump 44 is driven to cause the coolant to circulate in the order of the cold coolant cooler 36, second radiator 48, and cooler core 50. For use if the outside air temperature threshold is equal to or lower than a predetermined temperature when vehicle interior heating is required, there is a coolant bypass circuit, not shown, in which the coolant circulates in the circuit without passing through the cooler core 50. The second radiator may be provided before the first radiator. On the other hand, the hot coolant circuit 42 includes a hot coolant water pump 46 that is driven to cause the coolant to circulate in the circuit. An electric water pump is used for the cold coolant water pump 44 and hot coolant water pump 46. The hot coolant water pump 46 functions as a circulation unit. The temperature of the coolant circulating in the hot coolant circuit 42 is set to the temperature TW2 that is lower than the temperature TW1 of the engine fluid circuit, and the temperature of the coolant circulating in the cold coolant circuit 40 is set to the temperature TW3 that is lower than the temperature TW2.

In this embodiment, a switching valve 52, which is a first switching unit, is provided between the engine fluid circuit 12 and the heater fluid circuit 14 and, at the same time, a four-way valve 54, which is a second switching unit, is provided between the heater fluid circuit 14 and the cooling-heating fluid circuit 16.

The switching valve 52 switches the state between the connected state, in which the engine fluid circuit 12 and the heater fluid circuit 14 are connected, and the disconnected state in which the engine fluid circuit 12 and the heater fluid circuit 14 are disconnected. The four-way valve 54 switches the state between the connected state, in which the heater fluid circuit 14 and the cooling-heating fluid circuit 16 are connected, and the disconnected state in which the heater fluid circuit 14 and the cooling-heating fluid circuit 16 are disconnected. That is, the switching valve 52 and the four-way valve 54 can be used to switch the path in which the coolant circulates.

FIG. 1 shows the state in which the engine fluid circuit 12 and the heater fluid circuit 14 are disconnected by the switching valve 52 and in which the heater fluid circuit 14 and the cooling-heating fluid circuit 16 are connected by the four-way valve 54.

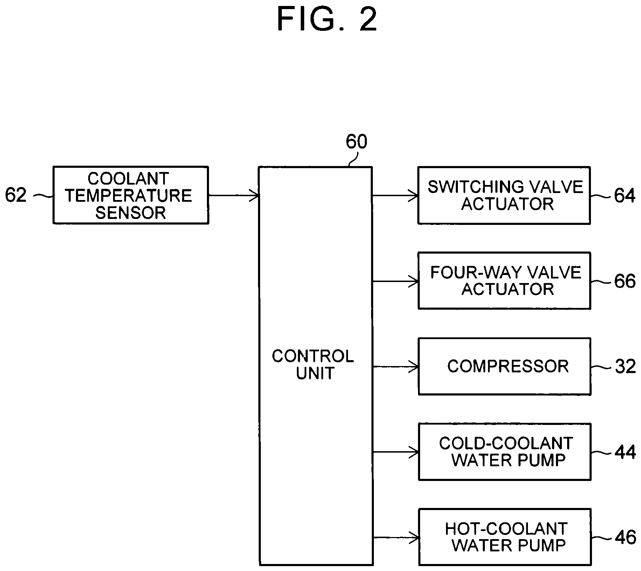

Next, the configuration of the control system of the vehicle-mounted heat utilization device 10 in this embodiment is described. FIG. 2 is a block diagram showing a general configuration of the control system of the vehicle-mounted heat utilization device 10 in the first embodiment.

The vehicle-mounted heat utilization device 10 in this embodiment includes a control unit 60 that controls the switching of the path in which the coolant circulates.

The control unit 60 is configured by a microcomputer that includes the components such as a central processing unit (CPU), a read only memory (ROM), and a random access memory (RAM).

To the control unit 60, a coolant temperature sensor 62 that works as a detection unit, a switching valve actuator 64, a four-way valve actuator 66, the compressor 32, the cold coolant water pump 44, and the hot coolant water pump 46 are connected. The switching valve actuator 64 corresponds to the first switching unit, and the four-way valve actuator 66 corresponds to the second switchover unit.

The coolant temperature sensor 62 detects the temperature of the coolant and outputs the detection result to the control unit 60. In this embodiment, the coolant temperature sensor 62, provided for example in an engine block, detects the temperature of the coolant that circulates in the engine fluid circuit 12.

The switching valve actuator 64 drives the switching valve 52 to switch the state of the engine fluid circuit and the heater fluid circuit between the connected state and the disconnected state.

The four-way valve actuator 66 drives the four-way valve 54 to switch the state of the heater fluid circuit and the cooling-heating fluid circuit between the connected state and the disconnected state.

The compressor 32, when driven, compresses and circulates the refrigerant in the refrigeration cycle 30.

The cold coolant water pump 44, when driven, circulates the coolant in the cold coolant circuit 40 in the order of the cold coolant cooler 36, second radiator 48, and cooler core 50.

The hot coolant water pump 46, when driven, circulates the coolant in the hot coolant circuit 42.

In the vehicle-mounted heat utilization device 10 configured as described above, the control unit 60 can control the driving of the switching valve actuator 64, four-way valve actuator 66, and compressor 32 to heat the vehicle interior more quickly when vehicle interior heating is started in the cold season.

More specifically, the vehicle interior can be heated more quickly in the cold season by placing the heater fluid circuit 14 and the cooling-heating fluid circuit 16 in the connected state by the four-way valve 54 as shown in FIG. 1 when performing the warmup operation in the cold season. That is, the coolant is heated by the exhaust heat recovery apparatus 26 in the heater fluid circuit 14 and, at the same time, by the hot coolant heater 34 in the cooling-heating fluid circuit 16. Therefore, the vehicle interior can be heated more quickly by heating the coolant by the two heat sources and by causing the heater core 24 to radiate the heat. At this time, by placing the engine fluid circuit 12 and the heater fluid circuit 14 in the disconnected state by the switching valve 52, the warmup operation can be performed without using the heat for the vehicle interior heating. That is, this configuration prevents the condition in which the heat is used for the vehicle interior heating, the warmup operation time is increased, and the fuel efficiency is decreased due to a mechanical loss.

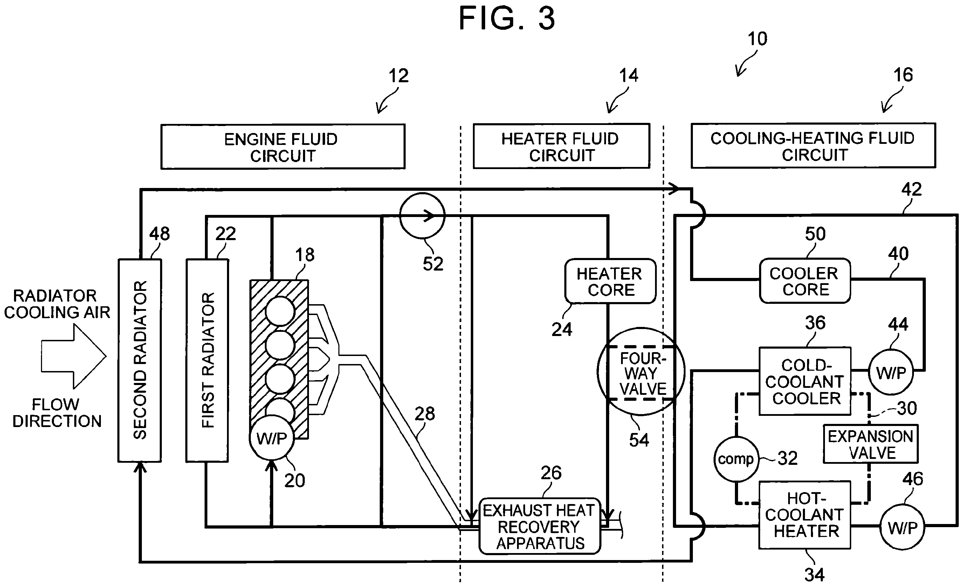

On the other hand, when the warmup operation is terminated, the engine fluid circuit 12 and the heater fluid circuit 14 are placed in the connected state by the switching valve 52 as shown in FIG. 3. In addition, the heater fluid circuit 14 and the cooling-heating fluid circuit 16 are placed in the disconnected state by the four-way valve 54 with the operation of the compressor 32 stopped. This connection state maintains the vehicle interior heating with the two heat sources, engine 18 and the exhaust heat recovery apparatus 26, while saving energy required for operating the compressor 32.

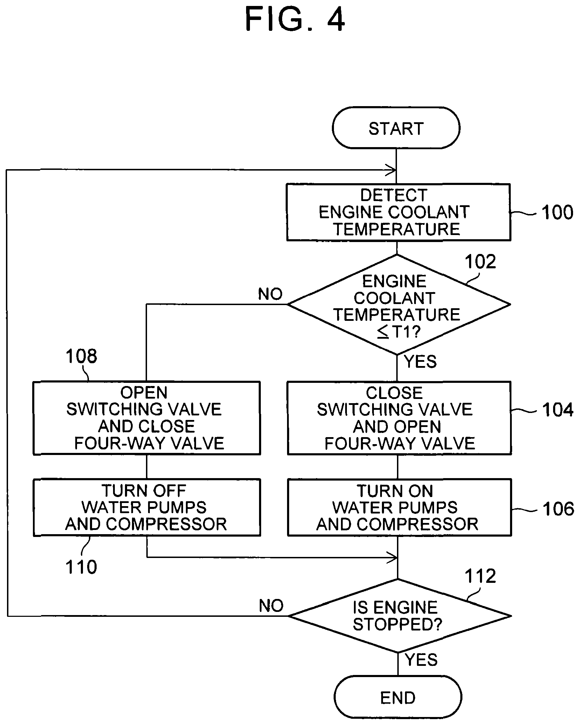

Next, the specific processing performed by the control unit 60 of the vehicle-mounted heat utilization device 10 in this embodiment is described. FIG. 4 is a flowchart showing an example of the flow of the processing performed by the control unit 60 of the vehicle-mounted heat utilization device 10 in the first embodiment. The processing in FIG. 4 is described assuming that the processing is started when the ignition switch, not shown, is turned on.

In step 100, the control unit 60 acquires the detection result of the coolant temperature sensor 62 to detect the engine coolant temperature, and the processing proceeds to step 102.

In step 102, the control unit 60 determines whether the detected engine coolant temperature is equal to or lower than the predetermined temperature T1. The processing proceeds to step 104 if the determination is affirmative, and to step 108 if the determination is negative. The predetermined temperature T1 may be a predetermined temperature at which the warmup operation is required.

In step 104, the control unit 60 closes the switching valve 52 and opens the four-way valve 54 and, after that, the processing proceeds to step 106. That is, the control unit 60 causes the switching valve actuator 64 to actuate the switching valve 52 so that the engine fluid circuit 12 and the heater fluid circuit 14 are placed in the disconnected state and, in addition, causes the four-way valve actuator 66 to actuate the four-way valve 54 so that the heater fluid circuit 14 and the cooling-heating fluid circuit 16 are placed in the connected state.

In step 106, the control unit 60 turns on the water pumps (cold coolant water pump 44 and hot coolant water pump 46) and the compressor 32 and, after that, the processing proceeds to step 112. As a result, the state shown in FIG. 1 is generated. In this state, the coolant is heated by the two heat sources, exhaust heat recovery apparatus 26 and the hot coolant heater 34 in the refrigeration cycle 30, and the heat is radiated by the heater core 24 and, as a result, the vehicle interior is heated more quickly.

On other hand, in step 108, the control unit 60 opens the switching valve 52 and closes the four-way valve 54 and, after that, the processing proceeds to step 110. That is, the control unit 60 causes the switching valve actuator 64 to actuate the switching valve 52 so that the engine fluid circuit 12 and the heater fluid circuit 14 are placed in the connected state, and causes the four-way valve actuator 66 to actuate the four-way valve 54 so that the heater fluid circuit 14 and the cooling-heating fluid circuit 16 are placed in the disconnected state.

In step 110, the control unit 60 turns off the water pumps (cold coolant water pump 44 and hot coolant water pump 46) and the compressor 32 and, after that, the processing proceeds to step 112. As a result, the state shown in FIG. 3 is generated. In this state, after the warmup operation, the vehicle interior heating is maintained by the two heat sources, the engine 18 and the exhaust heat recovery apparatus 26.

After that, in step 112, the control unit 60 determines whether the engine is stopped. This determination is made by determining whether the ignition switch, not shown, is turned off. If the determination is negative, the processing returns to step 100 to repeat the processing described above. If the determination is affirmative, the series of processing is terminated.

The control described above, performed by the control unit 60 in this manner, prevents the heat from being used for vehicle interior heating during the warmup operation in the cold season, thus raising the temperature of the coolant in the engine fluid circuit 12 more quickly with the result that the warmup operation time is reduced. In addition, the two heat sources (the exhaust heat recovery apparatus 26 of the heater fluid circuit 14 and the hot coolant heater 34 of the cooling-heating fluid circuit 16) are used to heat the coolant for use by the heater core 24 to heat the vehicle interior, thus heating the vehicle interior more quickly in the cold season.

### (Second embodiment)

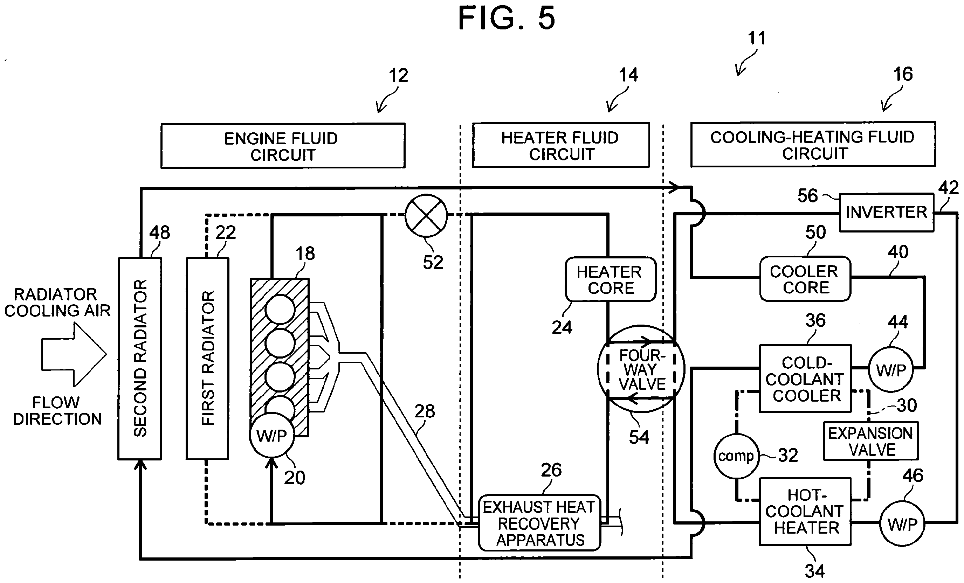

Next, a vehicle-mounted heat utilization device 11 in a second embodiment is described below. FIG. 5 is a diagram showing a general configuration of the vehicle-mounted heat utilization device in the second embodiment. For the same configuration as that in the first embodiment, the same reference numeral is used and the detailed description is omitted.

The vehicle-mounted heat utilization device 11 in this embodiment is a modification of the first embodiment with the basic configuration similar to that of the vehicle-mounted heat utilization device 10 in the first embodiment. The vehicle-mounted heat utilization device 11 differs from the vehicle-mounted heat utilization device 10 in the first embodiment in that the hot coolant circuit 42 of the cooling-heating fluid circuit 16 further includes an inverter 56 that is an on-vehicle heat receiving apparatus.

In this embodiment, the cooling-heating fluid circuit 16 has an on-vehicle heat receiving apparatus, such as the inverter 56, installed therein, thereby adding a function to prevent the on-vehicle heat receiving apparatus from being frozen.

The inverter 56, mounted for example on a hybrid car, converts the power, supplied from the storage battery to the motor, from direct-current power to alternating-current power before the power is supplied. In this embodiment, if there is a possibility of freezing, the inverter 56 is heated by the vehicle-mounted heat utilization device 11 to prevent freezing.

Because a functional component such as the inverter 56, if heated to the temperature TW1 of the engine fluid circuit 12, may be damaged, accurate flow amount control is required to prevent it from being frozen using the coolant heated by the engine fluid circuit 12. However, in this embodiment, the inverter 56 is provided in the hot coolant circuit 42 of the cooling-heating fluid circuit 16 and, in addition, the setting temperature of the hot coolant circuit 42 can only be raised up to the temperature TW2 that is lower than the temperature TW1 as described in the first embodiment. Therefore, the control is easier than when the coolant heated by the engine fluid circuit 12 is used.

Although the inverter 56 is used as an example of an on-vehicle heat receiving apparatus, this embodiment is not limited thereto. For example, the on-vehicle heat receiving apparatus may be a throttle body. In addition, a component that may be damaged, if heated to the temperature TW1 of the engine fluid circuit 12, may be used.

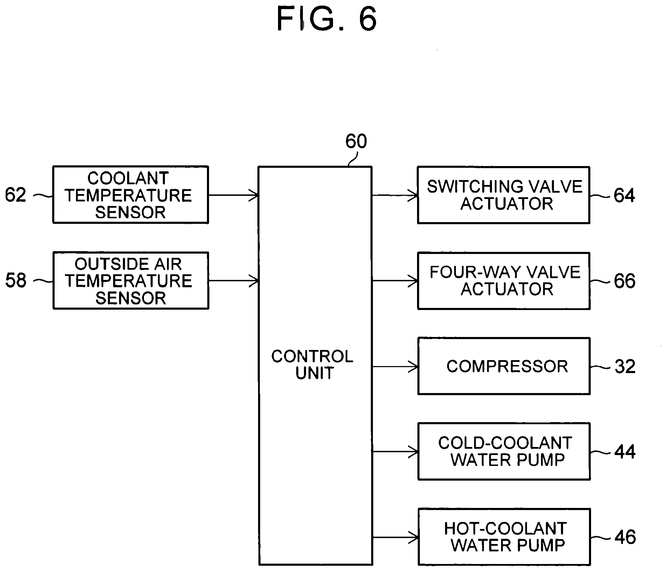

FIG. 6 is a block diagram showing a general configuration of a control system of the vehicle-mounted heat utilization device 11 in the second embodiment. For the same configuration as that in the first embodiment, the same reference numeral is used and the detailed description is omitted.

As shown in FIG. 6, the configuration of the control system of the vehicle-mounted heat utilization device 11 in this embodiment differs from that of the control system in the first embodiment only in that the control unit 60 further includes an outside air temperature sensor 58. Because the other configurations are the same as those in the first embodiment, the detailed description is omitted.

The outside air temperature sensor 58 detects the outside air temperature of the vehicle and outputs the detection result to the control unit 60. In this embodiment, the control unit 60 determines whether to maintain the operation of the compressor 32 after the termination of the warmup operation according to the detection result of the outside air temperature sensor 58 and, then, controls the operation of the compressor 32. That is, in this embodiment, if there is a possibility that the inverter 56 will be frozen, the operation of the compressor 32 is maintained to heat the inverter 56 by the hot coolant heater 34 of the hot coolant circuit 42.

More specifically, when performing the warmup operation in the cold season, the vehicle interior can be heated more quickly in the cold season by placing the heater fluid circuit 14 and the cooling-heating fluid circuit 16 in the connected state by the four-way valve 54 as in the first embodiment. That is, because the coolant is heated by the exhaust heat recovery apparatus 26 in the heater fluid circuit 14 and, at the same time, by the hot coolant heater 34 in the cooling-heating fluid circuit 16, the vehicle interior can be heated more quickly by heating the coolant by the two heat sources and by causing the heater core 24 to radiate the heat. At this time, by placing the engine fluid circuit 12 and the heater fluid circuit 14 in the disconnected state by the switching valve 52, the warmup operation can be performed without using the heat for vehicle interior heating. That is, this configuration prevents the condition in which the heat is used for vehicle interior heating, the warmup operation time is increased, and the fuel efficiency is decreased due to a mechanical loss. In addition, in this embodiment, the temperature of the coolant circulating in the inverter 56 can only be raised up to the temperature TW2, which is lower than the temperature TW1 of the engine fluid circuit 12, because the engine fluid circuit 12 and the heater fluid circuit 14 are placed in the disconnected state. Therefore, freezing can be prevented while ensuring the ability to withstand high temperature for functional components such as an inverter.

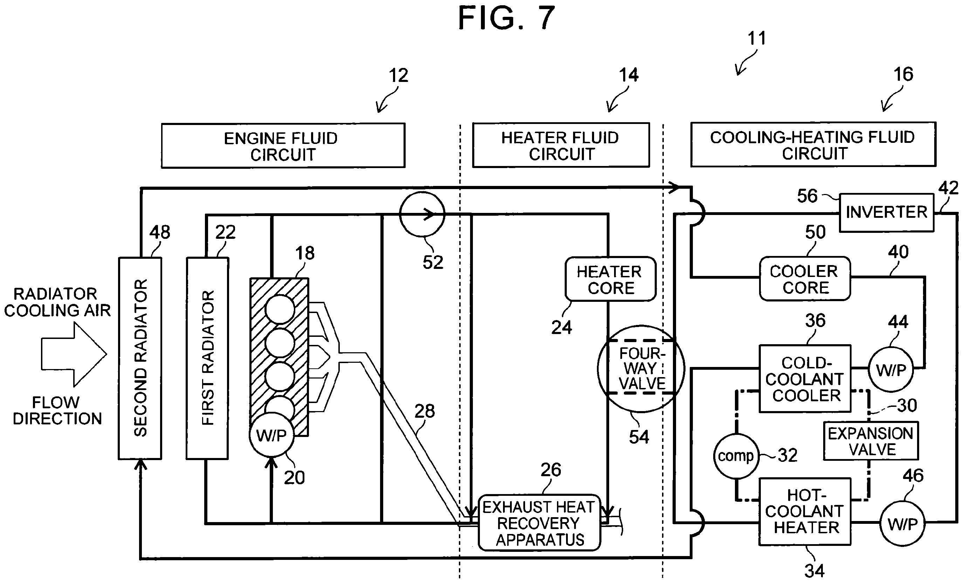

On the other hand, when the warmup operation is terminated, the vehicle interior heating is maintained by the two heat sources, the engine 18 and the exhaust heat recovery apparatus 26, by placing the engine fluid circuit 12 and the heater fluid circuit 14 in the connected state by the switching valve 52 and by placing the heater fluid circuit 14 and the cooling-heating fluid circuit 16 in the disconnected state by the four-way valve 54, as shown in FIG. 7. At this time, this embodiment determines whether to maintain the operation of the compressor 32 according to the outside air temperature. If the outside air temperature is equal to or lower than a predetermined temperature (for example, 0°C), the compressor 32 is not turned off but the operation of the compressor 32 is maintained to allow the hot coolant heater 34 to heat the coolant in the cooling-heating fluid circuit 16. Heating the coolant in this manner can maintain the prevention of freezing of the inverter 56.

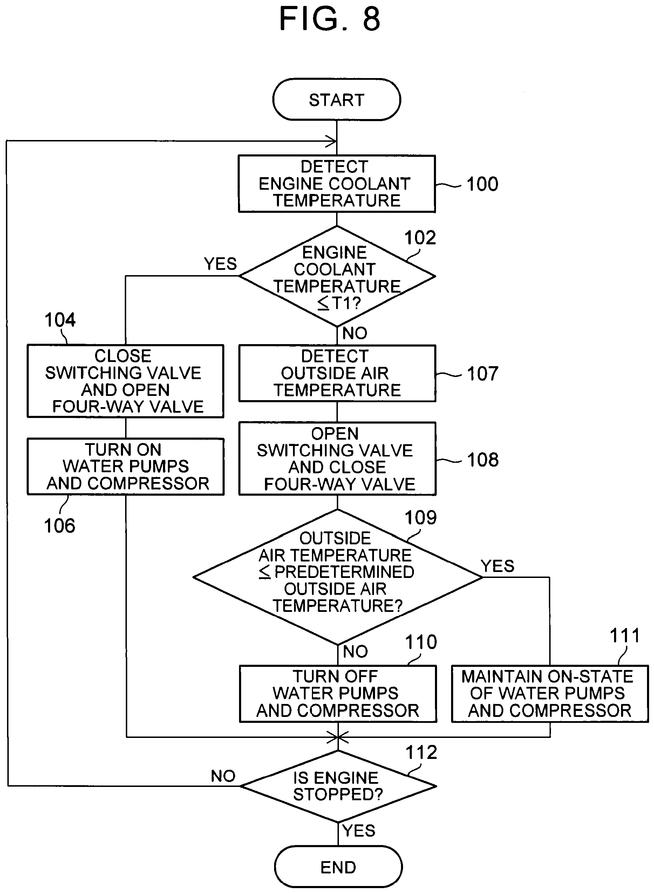

Next, the specific processing performed by the control unit 60 of the vehicle-mounted heat utilization device 11 in this embodiment, configured as described above, is described. FIG. 8 is a flowchart showing an example of the flow of the processing performed by the control unit 60 of the vehicle-mounted heat utilization device 11 in the second embodiment. The processing in FIG. 8 is described assuming that the processing is started when the ignition switch, not shown, is turned on. For the same processing as that in the first embodiment, the same reference numeral is used.

In step 100, the control unit 60 acquires the detection result of the coolant temperature sensor 62 to detect the engine coolant temperature, and the processing proceeds to step 102.

In step 102, the control unit 60 determines whether the detected engine coolant temperature is equal to or lower than the predetermined temperature T1. The processing proceeds to step 104 if the determination is affirmative, and to step 107 if the determination is negative. The predetermined temperature T1 may be a predetermined temperature at which the warmup operation is required.

In step 104, the control unit 60 closes the switching valve 52 and opens the four-way valve 54 and, after that, the processing proceeds to step 106. That is, the control unit 60 causes the switching valve actuator 64 to actuate the switching valve 52 so that the engine fluid circuit 12 and the heater fluid circuit 14 are placed in the disconnected state and, in addition, causes the four-way valve actuator 66 to actuate the four-way valve 54 so that the heater fluid circuit 14 and the cooling-heating fluid circuit 16 are placed in the connected state.

In step 106, the control unit 60 turns on the water pumps (cold coolant water pump 44 and hot coolant water pump 46) and the compressor 32 and, after that, the processing proceeds to step 112. As a result, the state shown in FIG. 5 is generated. In this state, the coolant is heated by the two heat sources, exhaust heat recovery apparatus 26 and the hot coolant heater 34 in the refrigeration cycle 30, and the heat is radiated by the heater core 24 and, as a result, the vehicle interior is heated more quickly.

On the other hand, in step 107, the control unit 60 acquires the detection result of the outside air temperature sensor 58 to detect the outside air temperature and the processing proceeds to step 108. Step 107 may be performed before step 102.

In step 108, the control unit 60 opens the switching valve 52 and closes the four-way valve 54 and, after that, the processing proceeds to step 109. That is, the control unit 60 causes the switching valve actuator 64 to actuate the switching valve 52 so that the engine fluid circuit 12 and the heater fluid circuit 14 are placed in the connected state, and causes the four-way valve actuator 66 to actuate the four-way valve 54 so that the heater fluid circuit 14 and the cooling-heating fluid circuit 16 are placed in the disconnected state.

In step 109, the control unit 60 determines whether the outside air temperature is equal to or lower than the predetermined outside air temperature (for example, 0°C) and, based on the result, determines whether to raise the temperature of the inverter 56. The processing proceeds to step 110 if the determination is negative, and to step 111 if the determination is affirmative.

In step 110, the control unit 60 turns off the water pumps (cold coolant water pump 44 and hot coolant water pump 46) and the compressor 32 and, after that, the processing proceeds to step 112. As a result, the state shown in FIG. 7 is generated. In this state, after the warmup operation, the vehicle interior heating is maintained by the two heat sources, the engine 18 and the exhaust heat recovery apparatus 26.

On the other hand, in step 111, the control unit 60 maintains the on-state of the water pumps (cold coolant water pump 44 and hot coolant water pump 46) and the compressor 32 and, after that, the processing proceeds to step 112. As a result, the state shown in FIG. 7 is generated. In this state, after the warmup operation, the vehicle interior heating is maintained by the two heat sources, the engine 18 and the exhaust heat recovery apparatus 26 and, at the same time, the prevention of freezing of the inverter 56 is maintained by the heating of the coolant by the hot coolant heater 34.

After that, in step 112, the control unit 60 determines whether the engine is stopped. This determination is made by determining whether the ignition switch, not shown, is turned off. If the determination is negative, the processing returns to step 100 to repeat the processing described above. If the determination is affirmative, the series of processing is terminated.

The control, performed by the control unit 60 as described above, gives the effect similar to that of the first embodiment and, at the same time, prevents the freezing of an on-vehicle heat receiving apparatus, such as an inverter, that might be damaged by high temperature.

Although, when the outside air temperature is equal to or lower than the predetermined temperature, the compressor 32 is not turned off but the operation of the compressor 32 is maintained in this embodiment to allow the hot coolant heater 34 to heat the coolant in the cooling-heating fluid circuit 16 to heat the inverter 56, this embodiment is not limited thereto. For example, the temperature of, not the outside air, but the inverter 56, may be detected to perform control according to the temperature of the inverter 56.

### (Third embodiment)

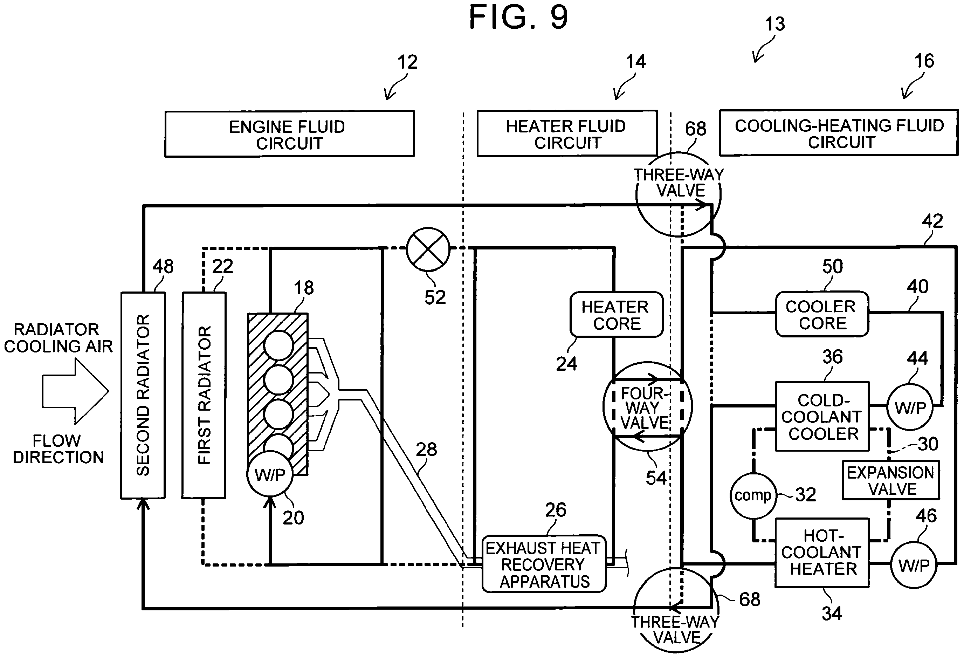

Next, a vehicle-mounted heat utilization device 13 in a third embodiment is described below. FIG. 9 is a diagram showing a general configuration of the vehicle-mounted heat utilization device in the third embodiment. For the same configuration as that in the first embodiment, the same reference numeral is used and the detailed description is omitted.

The vehicle-mounted heat utilization device 13 in this embodiment is a modification of the first embodiment with the basic configuration similar to that of the vehicle-mounted heat utilization device 10 in the first embodiment. The vehicle-mounted heat utilization device 13 differs from the vehicle-mounted heat utilization device 10 in the first embodiment in that the connection of the second radiator can be selectively switched between the cold coolant circuit 40 and the hot coolant circuit 42.

In this embodiment, three-way valves 68 are provided as shown in FIG. 9, one before the second radiator 48 and the other after the second radiator 48, each as a connection unit.

The three-way valves 68, connected to the both ends of the second radiator 48, to the cold coolant circuit 40, and to the hot coolant circuit 42, selectively switch the connection of the second radiator 48 between the cold coolant circuit 40 and the hot coolant circuit 42. This selective connection switching allows the second radiator 48 to perform heat exchange between the coolant and the outside air according to a request from the vehicle (a heater request, an air conditioner request, and other cooling-heating balancing requests).

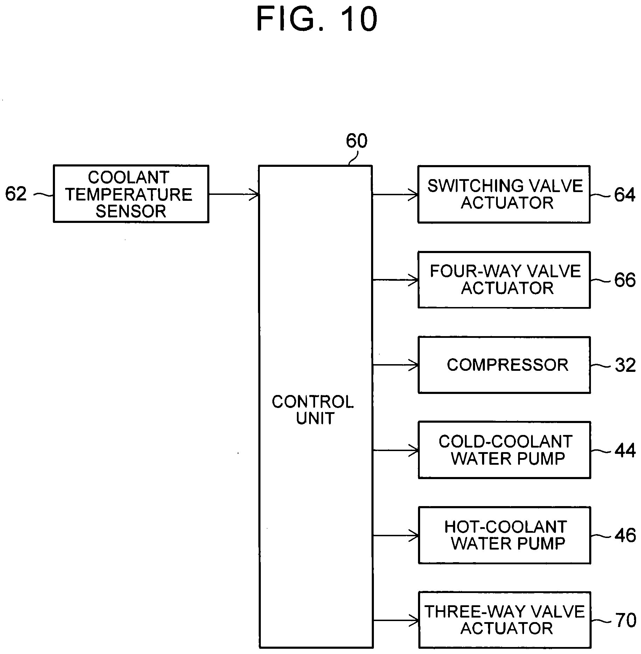

FIG. 10 is a block diagram showing a general configuration of the control system of the vehicle-mounted heat utilization device 13 in the third embodiment. For the same configuration as that in the first embodiment, the same reference numeral is used and the detailed description is omitted.

As shown in FIG. 10, the configuration of the control system of the vehicle-mounted heat utilization device 13 in this embodiment differs from that of the control system in the first embodiment only in that the control unit 60 further includes a three-way valve actuator 70. Because the other configurations are the same as those in the first embodiment, the detailed description is omitted.

The three-way valve actuator 70 drives the three-way valves 68, provided before and after of the second radiator 48, to selectively switch the connection of the second radiator 48 between the cold coolant circuit 40 and the hot coolant circuit 42. In this embodiment, the control unit 60 switches the three-way valve actuator 70 according to a request from the vehicle.

The second radiator 48 absorbs heat if the outside air temperature is higher than the temperature of the fluid that enters the second radiator 48, and radiates heat if the outside air temperature is lower than the temperature of the fluid that enters the second radiator. Heat absorption is required when the whole vehicle system requires heat (for example, when a heater is required in the winter season), and heat radiation is required when heat is not required (for example, air conditioning is required in the summer season). To meet this requirement, the control unit 60 controls the three-way valves 68 according to a request from the vehicle in this embodiment to selectively switch the connection of the second radiator 48 between the cold coolant circuit 40 and the hot coolant circuit 42. At the same time, the control unit 60 controls the operation of the cold coolant water pump 44, hot coolant water pump 46, and compressor 32.

More specifically, when the warmup operation is performed, the engine fluid circuit 12 and the heater fluid circuit 14 are placed in the disconnected state by the switching valve 52, and the heater fluid circuit 14 and the cooling-heating fluid circuit 16 are placed in the connected state by the four-way valve 54, as shown in FIG. 9. In addition, the second radiator 48 is connected to the cold coolant circuit 40 by the three-way valves 68, and the water pumps (cold coolant water pump 44 and hot coolant water pump 46) and the compressor 32 are turned on. By doing so, the coolant is heated by the two heat sources, the exhaust heat recovery apparatus 26 and the hot coolant heater 34, and heat is radiated by the heater core 24 to heat the vehicle interior.

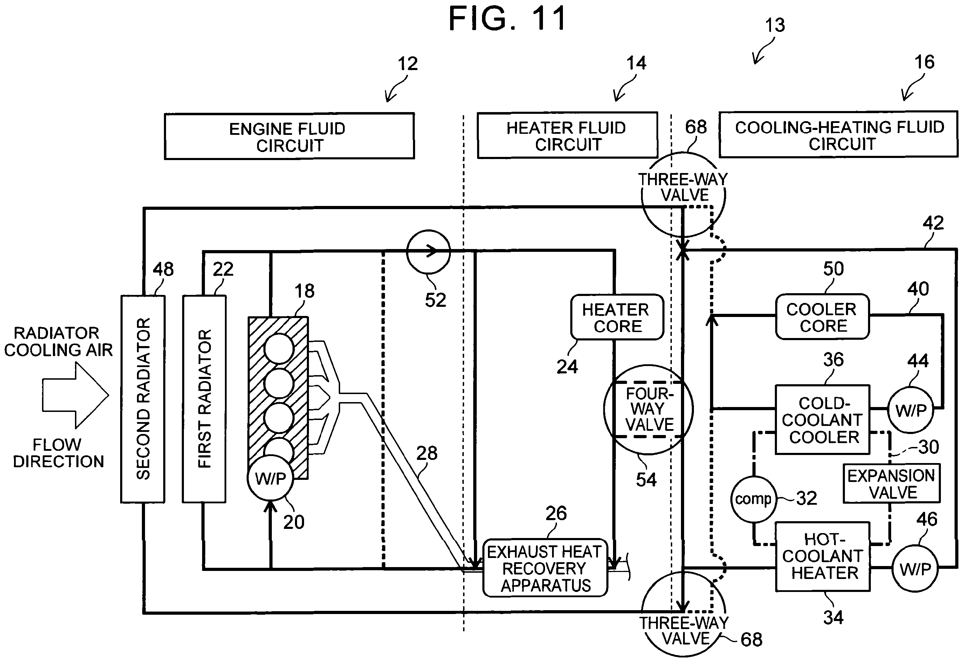

On the other hand, if air conditioning is required after the warmup operation is terminated, the engine fluid circuit 12 and the heater fluid circuit 14 are placed in the connected state by the switching valve 52, and the heater fluid circuit 14 and the cooling-heating fluid circuit 16 are placed in the disconnected state by the four-way valve 54, as shown in FIG. 11. After that, the connection of the second radiator 48 is switched from the cold coolant circuit 40 to the hot coolant circuit 42 by the three-way valves 68, and the on-state of the water pumps (cold coolant water pump 44 and hot coolant water pump 46) and the compressor 32 is maintained. By doing so, the vehicle interior is cooled by the cooler core 50.

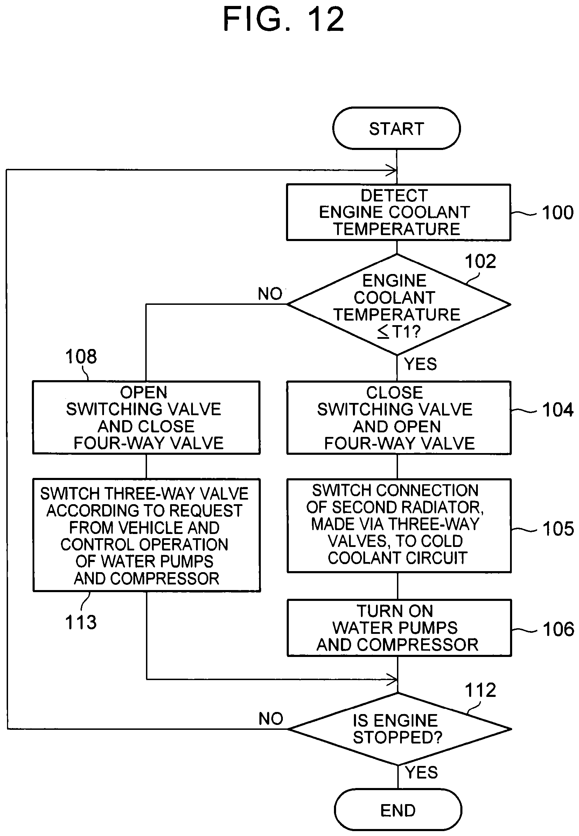

Next, the specific processing performed by the control unit 60 of the vehicle-mounted heat utilization device 13 in this embodiment, configured as described above, is described. FIG. 12 is a flowchart showing an example of the flow of the processing performed by the control unit 60 of the vehicle-mounted heat utilization device 13 in the third embodiment. The processing in FIG. 12 is described assuming that the processing is started when the ignition switch, not shown, is turned on. For the same processing as that in the first embodiment, the same reference numeral is used.

In step 100, the control unit 60 acquires the detection result of the coolant temperature sensor 62 to detect the engine coolant temperature, and the processing proceeds to step 102.

In step 102, the control unit 60 determines whether the detected engine coolant temperature is equal to or lower than the predetermined temperature T1. The processing proceeds to step 104 if the determination is affirmative, and to step 108 if the determination is negative. The predetermined temperature T1 may be a predetermined temperature at which the warmup operation is required.

In step 104, the control unit 60 closes the switching valve 52 and opens the four-way valve 54 and, after that, the processing proceeds to step 105. That is, the control unit 60 causes the switching valve actuator 64 to actuate the switching valve 52 so that the engine fluid circuit 12 and the heater fluid circuit 14 are placed in the disconnected state and, in addition, causes the four-way valve actuator 66 to actuate the four-way valve 54 so that the heater fluid circuit 14 and the cooling-heating fluid circuit 16 are placed in the connected state.

In step 105, the control unit 60 switches the connection of the second radiator 48, which is made via the three-way valves 68, to the cold coolant circuit 40 and, after that, the processing proceeds to step 106. That is, the control unit 60 causes the three-way valve actuator 70 to actuate the three-way valves 68 so that connection of the second radiator 48, which is made the three-way valves 68, is switched to the cold coolant circuit 40 to allow the coolant, circulating in the cold coolant circuit 40, to be circulated in the second radiator 48.

In step 106, the control unit 60 turns on the water pumps (cold coolant water pump 44 and hot coolant water pump 46) and the compressor 32 and, after that, the processing proceeds to step 112. As a result, the state shown in FIG. 9 is generated. In this state, the coolant is heated by the two heat sources, exhaust heat recovery apparatus 26 and the hot coolant heater 34 in the refrigeration cycle 30, and the heat is radiated by the heater core 24 and, as a result, the vehicle interior is heated more quickly.

On the other hand, in step 108, the control unit 60 opens the switching valve 52 and closes the four-way valve 54 and, after that, the processing proceeds to step 113. That is, the control unit 60 causes the switching valve actuator 64 to actuate the switching valve 52 so that the engine fluid circuit 12 and the heater fluid circuit 14 are placed in the connected state, and causes the four-way valve actuator 66 to actuate the four-way valve 54 so that the heater fluid circuit 14 and the cooling-heating fluid circuit 16 are placed in the disconnected state.

In step 113, the control unit 60 switches the three-way valves 68 according to a request from the vehicle and controls the operation of the water pumps (cold coolant water pump 44 and hot coolant water pump 46) and the compressor 32 and, after that, the processing proceeds to step 112. For example, when air conditioning is required by a request from the vehicle as described above, the three-way valves 68 are actuated to switch the connection of the second radiator 48 from the cold coolant circuit 40 to the hot coolant circuit 42 and the on-state of the water pumps (cold coolant water pump 44 and hot coolant water pump 46) and the compressor 32 is maintained as shown in FIG. 11. By doing so, the vehicle interior is cooled by the cooler core 50. Not only the vehicle interior but also the on-vehicle apparatuses may be cooled.

After that, in step 112, the control unit 60 determines whether the engine is stopped. This determination is made by determining whether the ignition switch, not shown, is turned off. If the determination is negative, the processing returns to step 100 to repeat the processing described above. If the determination is affirmative, the series of processing is terminated.

The control, performed by the control unit 60 as described above, allows the connection of the second radiator 48 to be switched between the cold coolant circuit 40 and the hot coolant circuit 42 according to a request from the vehicle that is made depending upon the outside air temperature after the warmup operation is terminated. In other words, the coolant can be heated and cooled by one radiator.

Although the valves (switching valve 52, four-way valve 54, and three-way valve 68) are driven by the actuators (switching valve actuator 64, four-way valve actuator 66, and three-way valve actuator 70) in the examples in the embodiments above, the present invention is not limited thereto. For example, the embodiments may be configured in such a way that the valves are switched manually or at least one valve is switched manually.

Although the second embodiment and the third embodiment are described separately as a modification of the first embodiment in the embodiments above, the second embodiment and the third embodiment may be combined.

A configuration is possible in which the cooler core 50 is omitted in the first embodiment and the second embodiment.

Although the example in which the exhaust heat recovery apparatus 26 is provided in the heater fluid circuit 14 is described in the embodiments above, the present invention is not limited thereto. For example, instead of the exhaust heat recovery apparatus 26, an Exhaust Gas Recirculation (EGR) or a transaxle may be provided in the circulation path of the coolant in the heater fluid circuit 14.

The processing performed by the control unit 60 in the above embodiments may be software processing that is performed by a computer by executing the program or may be processing performed by hardware. Instead, the processing may be a combination of software and hardware. The program used when the processing is performed by software may be stored on various types of recording medium for distribution.

It is apparent that the present invention is not limited to the embodiments above and, in addition to the embodiments above, various modifications may be implemented without departing from the scope of the invention, the latter being defined by the appended claims only.

## Claims

1. A vehicle-mounted heat utilization device (10) comprising:
an engine fluid circuit (12) in which fluid circulates to cool an engine(18);
a heater fluid circuit (14) in which the fluid circulates, the heater fluid circuit (14) passing through an exhaust heat recovery apparatus (26) and a vehicle-interior heat exchanger (24) for radiating a heat of the fluid into a vehicle interior, the exhaust heat recovery apparatus (26) being configured to recover a heat of exhaust gas;
**characterised by**:
a cooling-heating fluid circuit (16) in which the fluid circulates, the cooling-heating fluid circuit (16) passing through a radiating heat exchanger (34), the radiating heat exchanger (34) being included in a refrigeration cycle (30) in which refrigerant is compressed by a compressor (32) and the compressed refrigerant is expanded;
a first switching unit (52) provided between the engine fluid circuit (12) and the heater fluid circuit (14), the first switching unit (52) being configured to selectively switch a state between a connected state of the first switching unit (52) and a disconnected state of the first switching unit (52), the connected state of the first switching unit (52) being a state in which the engine fluid circuit (12) and the heater fluid circuit (14) are connected, the disconnected state of the first switching unit (52) being a state in which the engine fluid circuit (12) and the heater fluid circuit (14) are disconnected;
a second switching unit (54) provided between the heater fluid circuit (14) and the cooling-heating fluid circuit (16), the second switching unit (54) being configured to selectively switch a state between a connected state of the second switching unit (54) and a disconnected state of the second switching unit (54), the connected state of the second switching unit (54) being a state in which the heater fluid circuit (14) and the cooling-heating fluid circuit (16) are connected, the disconnected state of the second switching unit (54) being a state in which the heater fluid circuit (14) and the cooling-heating fluid circuit (16) are disconnected; and
a circulation unit (46) that circulates the fluid having passed the radiating heat exchanger (34), in the heater fluid circuit (14) when the heater fluid circuit (14) and the cooling-heating fluid circuit (16) are placed in the connected state by the second switching unit (54).

2. The vehicle-mounted heat utilization device (10) according to claim 1, wherein
the circulation unit (46) is a pump provided in the cooling-heating fluid circuit (16).

3. The vehicle-mounted heat utilization device according to claim 1 or 2, wherein
the cooling-heating fluid circuit (16) passes through an on-vehicle heat receiving apparatus (56).

4. The vehicle-mounted heat utilization device (10) according to any one of claims 1 to 3, further comprising
a first heat exchanger (22) that radiates a heat of the fluid of the engine fluid circuit (12), and
a second heat exchanger (48), the second heat exchanger (48) being selectively connectable to a cold coolant circuit (40) and a hot coolant circuit (42), the cold coolant circuit (40) passing through a heat absorbing heat exchanger (36) included in the refrigeration cycle (30), the hot coolant circuit (42) passing through the radiating heat exchanger (34).

5. The vehicle-mounted heat utilization device (10) according to claim 4, further comprising
a connection unit (46) that selectively connects the second heat exchanger (46) to the cold coolant circuit (40) or to the hot coolant circuit (42).

6. The vehicle-mounted heat utilization device (10) according to any one of claims 1 to 5, further comprising
a detection unit (62) that detects a temperature of the fluid circulating in the engine fluid circuit (12), and
a control unit (60) configured to:
control the first switching unit (52), the second switching unit (54), and the compressor (32) so that the engine fluid circuit (12) and the heater fluid circuit (14) are disconnected, the heater fluid circuit (14) and the cooling-heating fluid circuit (16) are connected, and the compressor (32) is operated when the temperature detected by the detection unit (62) is equal to or lower than a predetermined temperature and
control the first switching unit (52), the second switching unit (54), and the compressor (32) so that the engine fluid circuit (12) and the heater fluid circuit (14) are connected, the heater fluid circuit (14) and the cooling-heating fluid circuit (16) are disconnected, and the compressor (32) is stopped when the temperature detected by the detection unit (62) is higher than the predetermined temperature.

7. The vehicle-mounted heat utilization device (10) according to claim 3, further comprising
a detection unit (62)) that detects a temperature of the fluid circulating in the engine fluid circuit (12),
an outside air temperature sensor (58) that detects an outside air temperature outside a vehicle, and
a control unit (60) configured to:
control the first switching unit (52), the second switching unit (54), and the compressor (32) so that the engine fluid circuit (12) and the heater fluid circuit (14) are disconnected, the heater fluid circuit (14) and the cooling-heating fluid circuit (16) are connected, and the compressor (32) is operated when the temperature detected by the detection unit (62) is equal to or lower than a predetermined temperature;
control the first switching unit (52), the second switching unit (54), and the compressor (32) so that the engine fluid circuit (12) and the heater fluid circuit (14) are connected, the heater fluid circuit (14) and the cooling-heating fluid circuit (16) are disconnected, and the compressor (32) is operated when the temperature detected by the detection unit (62) is higher than the predetermined temperature and the outside air temperature detected by the outside air temperature sensor (58) is lower than a second predetermined temperature; and
control the first switching unit (52), the second switching unit (54), and the compressor (32) so that the engine fluid circuit (12) and the heater fluid circuit (14) are connected, the heater fluid circuit (14) and the cooling-heating fluid circuit (16) are disconnected, and the compressor (32) is stopped when the temperature detected by the detection unit (62) is higher than the predetermined temperature and the outside air temperature detected by the outside air temperature sensor (58) is higher than the second predetermined temperature.

8. The vehicle-mounted heat utilization device according to claim 5, wherein
the connection unit (68) is configured to connect the second heat exchanger (48) and the hot coolant circuit (42) when the vehicle performs vehicle-interior air conditioning and to connect the second heat exchanger (48) and the cold coolant circuit (40) when the vehicle performs vehicle interior heating.

## Patentansprüche

1. Fahrzeugmontierte Vorrichtung (10) zur Nutzung von Wärme, die Folgendes umfasst:
einen Motorfluidkreislauf (12), in dem Fluid zirkuliert, um einen Motor (18) zu kühlen;
einen Heizerfluidkreislauf (14), in dem das Fluid zirkuliert, wobei der Heizerfluidkreislauf (14) durch eine Abgaswärmerückgewinnungsvorrichtung (26) und einen Fahrzeuginnenraum-Wärmetauscher (24) zum Abstrahlen einer Wärme des Fluids in einen Fahrzeuginnenraum verläuft, wobei die Abgaswärmerückgewinnungsvorrichtung (26) dazu ausgelegt ist, eine Abgaswärme zurückzugewinnen;
**gekennzeichnet durch**:
einen Kühl-Heiz-Fluidkreislauf (16), in dem das Fluid zirkuliert, wobei der Kühl-Heiz-Fluidkreislauf (16) durch einen Strahlungswärmetauscher (34) verläuft, wobei der Strahlungswärmetauscher (34) in einem Kühlzyklus (30) enthalten ist, in dem Kältemittel durch einen Kompressor (32) komprimiert wird und das komprimierte Kältemittel expandiert wird;
eine erste Schalteinheit (52), die zwischen dem Motorfluidkreislauf (12) und dem Heizerfluidkreislauf (14) vorgesehen ist, wobei die erste Schalteinheit (52) dazu ausgelegt ist, wahlweise einen Zustand zwischen einem angeschlossen Zustand der ersten Schalteinheit (52) und einem getrennten Zustand der ersten Schalteinheit (52) zu schalten, wobei der angeschlossene Zustand der ersten Schalteinheit (52) ein Zustand ist, in dem der Motorfluidkreislauf (12) und der Heizerfluidkreislauf (14) verbunden sind, wobei der getrennte Zustand der ersten Schalteinheit (52) ein Zustand ist, in dem der Motorfluidkreislauf (12) und der Heizerfluidkreislauf (14) getrennt sind;
eine zweite Schalteinheit (54), die zwischen dem Heizerfluidkreislauf (14) und dem Kühl-Heiz-Fluidkreislauf (16) vorgesehen ist, wobei die zweite Schalteinheit (54) dazu ausgelegt ist, wahlweise einen Zustand zwischen einem angeschlossenen Zustand der zweiten Schalteinheit (54) und einem getrennten Zustand der zweiten Schalteinheit (54) zu schalten, wobei der angeschlossene Zustand der zweiten Schalteinheit (54) ein Zustand ist, in dem der Heizerfluidkreislauf (14) und der Kühl-Heiz-Fluidkreislauf (16) verbunden sind, wobei der getrennte Zustand der zweiten Schalteinheit (54) ein Zustand ist, in dem der Heizerfluidkreislauf (14) und der Kühl-Heiz-Fluidkreislauf (16) getrennt sind; und
eine Zirkulationseinheit (46), die das Fluid, das den Strahlungswärmetauscher (34) passiert hat, in dem Heizerfluidkreislauf (14) zirkuliert, wenn der Heizerfluidkreislauf (14) und der Kühl-Heiz-Fluidkreislauf (16) durch die zweite Schalteinheit (54) in den verbundenen Zustand versetzt werden.

2. Fahrzeugmontierte Vorrichtung (10) zur Nutzung von Wärme nach Anspruch 1, wobei
die Zirkulationseinheit (46) eine im Kühl-Heiz-Fluidkreislauf (16) vorgesehene Pumpe ist.

3. Fahrzeugmontierte Vorrichtung (10) zur Nutzung von Wärme nach Anspruch 1 oder 2, wobei der Kühl-Heiz-Fluidkreislauf (16) eine Wärmeaufnahmevorrichtung (56) im Fahrzeug durchläuft.

4. Fahrzeugmontierte Vorrichtung (10) zur Nutzung von Wärme nach einem der Ansprüche 1 bis 3, ferner umfassend
einen ersten Wärmetauscher (22), der eine Wärme des Fluids des Motorfluidkreislaufs (12) abstrahlt, und
einen zweiten Wärmetauscher (48), wobei der zweite Wärmetauscher (48) wahlweise mit einem kalten Kühlmittelkreislauf (40) und einem heißen Kühlmittelkreislauf (42) verbindbar ist, wobei der kalte Kühlmittelkreislauf (40) einen wärmeabsorbierenden Wärmetauscher (36) durchläuft, der in dem Kühlzyklus (30) enthalten ist, wobei der heiße Kühlmittelkreislauf (42) den Strahlungswärmetauscher (34) durchläuft.

5. Fahrzeugmontierte Vorrichtung (10) zur Nutzung von Wärme nach Anspruch 4, ferner umfassend
eine Verbindungseinheit (46), die den zweiten Wärmetauscher (46) wahlweise mit dem kalten Kühlmittelkreislauf (40) oder dem heißen Kühlmittelkreislauf (42) verbindet.

6. Fahrzeugmontierte Vorrichtung (10) zur Nutzung von Wärme nach einem der Ansprüche 1 bis 5, ferner umfassend
eine Erkennungseinheit (62), die eine Temperatur des Fluids, das in dem Motorfluidkreislauf (12) zirkuliert, erkennt, und
eine Steuereinheit (60), die dazu ausgelegt ist:
die erste Schalteinheit (52), die zweite Schalteinheit (54) und den Kompressor (32) so zu steuern, dass der Motorfluidkreislauf (12) und der Heizerfluidkreislauf (14) getrennt sind, der Heizerfluidkreislauf (14) und der Kühl-Heiz-Fluidkreislauf (16) verbunden sind, und der Kompressor (32) betrieben wird, wenn die von der Erkennungseinheit (62) erkannte Temperatur gleich groß wie oder niedriger als eine vorbestimmte Temperatur ist, und
die erste Schalteinheit (52), die zweite Schalteinheit (54) und den Kompressor (32) so zu steuern, dass der Motorfluidkreislauf (12) und der Heizerfluidkreislauf (14) verbunden sind, der Heizerfluidkreislauf (14) und der Kühl-Heiz-Fluidkreislauf (16) getrennt sind, und der Kompressor (32) angehalten wird, wenn die von der Erkennungseinheit (62) erkannte Temperatur höher als die vorbestimmte Temperatur ist.

7. Fahrzeugmontierte Vorrichtung (10) zur Nutzung von Wärme nach Anspruch 3, ferner umfassend
eine Erkennungseinheit (62), die eine Temperatur des Fluids, das in dem Motorfluidkreislauf (12) zirkuliert, erkennt,
einen Außenlufttemperatursensor (58), der eine Außenlufttemperatur außerhalb eines Fahrzeugs erkennt, und
eine Steuereinheit (60), die dazu ausgelegt ist:
die erste Schalteinheit (52), die zweite Schalteinheit (54) und den Kompressor (32) so zu steuern, dass der Motorfluidkreislauf (12) und der Heizerfluidkreislauf (14) getrennt sind, der Heizerfluidkreislauf (14) und der Kühl-Heiz-Fluidkreislauf (16) verbunden sind, und der Kompressor (32) betrieben wird, wenn die von der Erkennungseinheit (62) erkannte Temperatur so groß wie oder kleiner als eine vorbestimmte Temperatur ist;
die erste Schalteinheit (52), die zweite Schalteinheit (54) und den Kompressor (32) so zu steuern, dass der Motorfluidkreislauf (12) und der Heizerfluidkreislauf (14) verbunden sind, der Heizerfluidkreislauf (14) und der Kühl-Heiz-Fluidkreislauf (16) getrennt sind, und der Kompressor (32) betrieben wird, wenn die von der Erkennungseinheit (62) erkannte Temperatur größer als die vorbestimmte Temperatur ist und die von dem Außenlufttemperatursensor (58) erkannte Außenlufttemperatur niedriger als eine zweite vorbestimmte Temperatur ist; und
die erste Schalteinheit (52), die zweite Schalteinheit (54) und den Kompressor (32) so zu steuern, dass der Motorfluidkreislauf (12) und der Heizerfluidkreislauf (14) verbunden sind, der Heizerfluidkreislauf (14) und der Kühl-Heiz-Fluidkreislauf (16) getrennt sind und der Kompressor (32) angehalten wird, wenn die von der Erkennungseinheit (62) erkannte Temperatur höher als die vorbestimmte Temperatur ist und die von dem Außenlufttemperatursensor (58) erkannte Außenlufttemperatur höher als die zweite vorbestimmte Temperatur ist.

8. Fahrzeugmontierte Vorrichtung zur Nutzung von Wärme nach Anspruch 5, wobei
die Verbindungseinheit (68) dazu ausgelegt ist, den zweiten Wärmetauscher (48) und den heißen Kühlmittelkreislauf (42) zu verbinden, wenn das Fahrzeug eine Fahrzeuginnenraumluftklimatisierung durchführt, und den zweiten Wärmetauscher (48) und den kalten Kühlmittelkreislauf (40) zu verbinden, wenn das Fahrzeug eine Fahrzeuginnenraumheizung durchführt.

## Revendications

1. Dispositif d'utilisation de chaleur monté sur un véhicule (10) comprenant :
un circuit de fluide de moteur (12) dans lequel circule un fluide pour refroidir un moteur (18) ;
un circuit de fluide d'élément de chauffage (14) dans lequel circule le fluide, le circuit de fluide d'élément de chauffage (14) traversant un appareil de récupération de chaleur d'échappement (26) et un échangeur de chaleur interne au véhicule (24) pour diffuser une chaleur du fluide vers l'intérieur d'un véhicule, l'appareil de récupération de chaleur d'échappement (26) étant conçu pour récupérer une chaleur des gaz d'échappement ;
**caractérisé par** :
un circuit de fluide de refroidissement-chauffage (16) dans lequel circule le fluide, le circuit de fluide de refroidissement-chauffage (16) traversant un échangeur de chaleur à diffusion (34), l'échangeur de chaleur à diffusion (34) étant inclus dans un cycle de réfrigération (30) dans lequel le fluide frigorigène est comprimé par un compresseur (32) et le fluide frigorigène comprimé subit une expansion ;
une première unité de commutation (52) disposée entre le circuit de fluide de moteur (12) et le circuit de fluide d'élément de chauffage (14), la première unité de commutation (52) étant conçue pour commuter sélectivement un état entre un état raccordé de la première unité de commutation (52) et un état débranché de la première unité de commutation (52), l'état raccordé de la première unité de commutation (52) étant un état dans lequel le circuit de fluide de moteur (12) et le circuit de fluide d'élément de chauffage (14) sont raccordés, l'état débranché de la première unité de commutation (52) étant un état dans lequel le circuit de fluide de moteur (12) et le circuit de fluide d'élément de chauffage (14) sont débranchés ;
une seconde unité de commutation (54) disposée entre le circuit de fluide d'élément de chauffage (14) et le circuit de fluide de refroidissement-chauffage (16), la seconde unité de commutation (54) étant conçue pour commuter sélectivement un état entre un état raccordé de la seconde unité de commutation (54) et un état débranché de la seconde unité de commutation (54), l'état raccordé de la seconde unité de commutation (54) étant un état dans lequel le circuit de fluide d'élément de chauffage (14) et le circuit de fluide de refroidissement-chauffage (16) sont raccordés, l'état débranché de la seconde unité de commutation (54) étant un état dans lequel le circuit de fluide d'élément de chauffage (14) et le circuit de fluide de refroidissement-chauffage (16) sont débranchés ; et
une unité de circulation (46) qui fait circuler le fluide ayant traversé l'échangeur de chaleur à diffusion (34), dans le circuit de fluide d'élément de chauffage (14) lorsque le circuit de fluide d'élément de chauffage (14) et le circuit de fluide de refroidissement-chauffage (16) sont placés dans l'état raccordé par la seconde unité de commutation (54).

2. Dispositif d'utilisation de chaleur monté sur un véhicule (10) selon la revendication 1,
l'unité de circulation (46) étant une pompe disposée dans le circuit de fluide de refroidissement-chauffage (16).

3. Dispositif d'utilisation de chaleur monté sur un véhicule selon la revendication 1 ou 2,
le circuit de fluide de refroidissement-chauffage (16) passant à travers un appareil de réception de chaleur embarqué dans un véhicule (56).

4. Dispositif d'utilisation de chaleur monté sur un véhicule (10) selon l'une quelconque des revendications 1 à 3, comprenant en outre
un premier échangeur de chaleur (22) qui diffuse une chaleur du fluide du circuit de fluide de moteur (12), et
un second échangeur de chaleur (48), le second échangeur de chaleur (48) pouvant être raccordé sélectivement à un circuit de fluide frigorigène froid (40) et à un circuit de fluide frigorigène chaud (42), le circuit de fluide frigorigène froid (40) traversant un échangeur de chaleur absorbant la chaleur (36) inclus dans le cycle de réfrigération (30), le circuit de fluide frigorigène chaud (42) traversant l'échangeur de chaleur à diffusion (34).

5. Dispositif d'utilisation de chaleur monté sur un véhicule (10) selon la revendication 4, comprenant en outre
une unité de raccordement (46) qui raccorde sélectivement le second échangeur de chaleur (46) au circuit de fluide frigorigène froid (40) ou au circuit de fluide frigorigène chaud (42).

6. Dispositif d'utilisation de chaleur monté sur un véhicule (10) selon l'une quelconque des revendications 1 à 5, comprenant en outre
une unité de détection (62) qui détecte une température du fluide circulant dans le circuit de fluide de moteur (12), et
une unité de commande (60) conçue pour :
commander la première unité de commutation (52), la seconde unité de commutation (54) et le compresseur (32) de sorte que le circuit de fluide de moteur (12) et le circuit de fluide d'élément de chauffage (14) soient débranchés, le circuit de fluide d'élément de chauffage (14) et le circuit de fluide de refroidissement (16) soient raccordés, et le compresseur (32) fonctionne lorsque la température détectée par l'unité de détection (62) est égale ou inférieure à une température prédéfinie et
commander la première unité de commutation (52), la seconde unité de commutation (54) et le compresseur (32) de sorte que le circuit de fluide de moteur (12) et le circuit de fluide d'élément de chauffage (14) soient raccordés, le circuit de fluide d'élément de chauffage (14) et le circuit de fluide de refroidissement-chauffage (16) soient débranchés, et le compresseur (32) soit arrêté lorsque la température détectée par l'unité de détection (62) est supérieure à la température prédéfinie.

7. Dispositif d'utilisation de chaleur monté sur un véhicule (10) selon la revendication 3, comprenant en outre
une unité de détection (62) qui détecte une température du fluide circulant dans le circuit de fluide de moteur (12),
un capteur de température d'air extérieur (58) qui détecte une température d'air extérieur à l'extérieur d'un véhicule, et
une unité de commande (60) conçue pour :
commander la première unité de commutation (52), la seconde unité de commutation (54) et le compresseur (32) de sorte que le circuit de fluide de moteur (12) et le circuit de fluide d'élément de chauffage (14) soient débranchés, le circuit de fluide d'élément de chauffage (14) et le circuit de fluide de refroidissement (16) soient raccordés, et le compresseur (32) fonctionne lorsque la température détectée par l'unité de détection (62) est égale ou inférieure à une température prédéfinie ;
commander la première unité de commutation (52), la seconde unité de commutation (54) et le compresseur (32) de sorte que le circuit de fluide de moteur (12) et le circuit de fluide d'élément de chauffage (14) soient raccordés, le circuit de fluide d'élément de chauffage (14) et le circuit de fluide de refroidissement-chauffage (16) soient débranchés, et le compresseur (32) fonctionne lorsque la température détectée par l'unité de détection (62) est supérieure à la température prédéfinie et la température d'air extérieur détectée par le capteur de température d'air extérieur (58) est inférieure à une seconde température prédéfinie ; et
commander la première unité de commutation (52), la seconde unité de commutation (54) et le compresseur (32) de sorte que le circuit de fluide de moteur (12) et le circuit de fluide d'élément de chauffage (14) soient raccordés, le circuit de fluide d'élément de chauffage (14) et le circuit de fluide de refroidissement-chauffage (16) soient débranchés, et le compresseur (32) soit arrêté lorsque la température détectée par l'unité de détection (62) est supérieure à la température prédéfinie et la température d'air extérieur détectée par le capteur de température d'air extérieur (58) est supérieure à la seconde température prédéfinie.

8. Dispositif d'utilisation de chaleur monté sur un véhicule selon la revendication 5, l'unité de raccordement (68) étant conçue pour raccorder le second échangeur de chaleur (48) et le circuit de fluide frigorigène chaud (42) lorsque le véhicule climatise l'air intérieur du véhicule et pour raccorder le second échangeur de chaleur (48) et le circuit de fluide frigorigène froid (40) lorsque le véhicule chauffe l'air intérieur du véhicule.
